# EUROPÄISCHE PATENTSCHRIFT

(11) **EP 1 898 111 B1**
(45) Veröffentlichungstag und Bekanntmachung des Hinweises auf die Patenterteilung: **24.11.2010**
(21) Anmeldenummer: 07016981.8
(22) Anmeldetag: 30.08.2007
(51) Int. Cl.: F16D 25/08

(54) **Zentralausrücker für eine hydraulische Kupplungsbetätigung**
Central release unit for hydraulic clutch actuation
Débrayage central pour un embrayage hydraulique

(30) Priorität: 08.09.2006 DE 202006014024 U
(43) Veröffentlichungstag der Anmeldung: 12.03.2008
(73) Patentinhaber: FTE automotive GmbH, 96106 Ebern (DE)
(72) Erfinder: Burkard, Johannes, 97486 Königsberg (DE); Gnyp, Jan, 96106 Ebern (DE)
(74) Vertreter: Oppermann, Mark

(56) Entgegenhaltungen:
- DE-A1- 10 242 841
- US-A1- 2001 030 097

## Beschreibung

### TECHNISCHES GEBIET

Die Erfindung bezieht sich auf einen Zentralausrücker für eine hydraulische Kupplungsbetätigung zum Aus- bzw. Einrücken einer Reibkupplung für Kraftfahrzeuge, der wie im Oberbegriff des Patentanspruchs 1 angegeben ausgebildet ist.

### STAND DER TECHNIK

Bei derartigen hydraulischen Kupplungsbetätigungen ist es bereits bekannt Sensoreinrichtungen vorzusehen, um mittelbar auf die Stellung der Kupplungsdruckplatte zurückzuschließen, ohne daß Eingriffe an den eigentlichen Bauteilen der Reibkupplung notwendig wären. Eine solche Sensierung ermöglicht zum einen eine Aussage über den Verschleißzustand der Reibkupplung. Zum anderen kann der Aus- bzw. Einrückzustand der Reibkupplung ermittelt werden, so daß z. B. bei automatisierten Getrieben die Kupplungsbetätigung im gewünschten Maße automatisch gesteuert werden kann, was beispielsweise eine Reduzierung der Kupplungsschaltzeiten ermöglicht. Die Ergebnisse der Sensierung können schließlich auch für Sicherheitsvorkehrungen im Betrieb des Kraftfahrzeugs verwendet werden, beispielsweise dafür, daß der Motor eines Kraftfahrzeugs nur dann gestartet werden kann, wenn das Kupplungspedal niedergetreten wird.

Bei einem bekannten Ausrücklager für eine Kupplung mit einem Magnetgeber (DE-A-102 42 841) der im Oberbegriff des Patentanspruchs 1 angegebenen Gattung ist der Magnetkörper am Sensor, dort Magnetgeber genannt, nur außen seitlich geführt und über einen Trägerarm starr mit dem Ringkörper, dort Kragen genannt, verbunden. Da der Ringkörper seinerseits aber fest mit dem Innenring des Ausrücklagers, dort Wälzlager genannt, und daher entsprechend fest auch mit dem Ringkolben verbunden ist, nimmt der Magnetkörper an allen Bewegungen der auf die beschriebene Weise fest miteinander verbundenen Bauelemente teil, d.h. nicht nur an den axialen Bewegungen. Auf diese Weise werden durch Taumelbewegungen des Ausrücklagers verursachte radiale und axiale Verlagerungen unmittelbar auf den Magnetkörper übertragen, wodurch der Abstand zwischen dem ortsfesten Sensor und dem beweglichen Magnetkörper nicht konstant bleibt, was nachteilig für die Genauigkeit des Sensorsignals ist. Darüber hinaus wird das im Betrieb auftretende Schleppmoment vom Magnetkörper, der mit seinen seitlichen Führungen mit dem Sensor in Kontakt steht, auf den Sensor übertragen, wodurch an den Kontaktflächen erheblicher Verschleiß auftritt, der wiederum die Genauigkeit des Sensorsignals beeinträchtigt, und zu einem vorzeitigen Funktionsausfall führen kann.

### AUFGABENSTELLUNG

Der Erfindung liegt die Aufgabe zugrunde, einen Zentralausrücker mit Magnetsensoreinrichtung so auszubilden, daß der Abstand zwischen dem Sensor und dem Magnetgeber bei allen axialen Relativverschiebungen und bei auftretenden Taumelbewegungen des Ausrücklagers konstant bleibt und an den Führungsflächen für den Magnetkörper durch die Einwirkung des Schleppmoments im Betrieb kein die Genauigkeit des Sensorsignals beeinträchtigender Verschleiß eintritt.

### DARSTELLUNG DER ERFINDUNG

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 4 und werden nachfolgend ebenfalls noch näher beschrieben.

Erfindungsgemäß ist bei einem Zentralausrücker für eine hydraulische Kupplungsbetätigung, der ein eine zylindrische Durchgangsbohrung aufweisendes Gehäuse und eine konzentrisch innerhalb der Durchgangsbohrung angeordnete und an ihrem eine Ende zentriert am Gehäuse befestigte rohrförmigen Hülse aufweist, auf der ein mit der Kupplung wirkverbindbarer Ringkolben axial verschiebbar geführt ist, an dessen äußerem Ende der Innenring eines Ausrücklagers befestigt ist, wobei ein Sensor zur Erfassung der axialen Position des Ringkolbens relativ zum Gehäuse stationär am Gehäuse befestigt ist, und wobei dem Sensor ein axial verschiebbar geführter Magnetkörper zugeordnet ist, der mit einem am Innenring befestigten Ringkörper zur Mitnahme durch den Ringkolben bei dessen axialen Verschiebungen axial spielfrei verbunden ist; der Magnetkörper mit über seinen Verschiebeweg gleichbleibendem Abstand zum Sensor am Gehäuse verschiebbar geführt und greift mit einem Führungsschuh in eine Umfangsnut des Ringkörpers axial spielfrei aber radial beweglich ein.

Nach dem Grundgedanken der Erfindung ist der Magnetkörper also in axialer Verschieberichtung präzise am Gehäuse geführt und greift axial spielfrei mit dem am Ringkolben angeschlossenen Ringkörper ein, ist jedoch in radialer Richtung von dem Ringkörper entkoppelt, so daß radiale Verlagerungen des Ringkörpers gegenüber dem Magnetkörper ohne Axialspiel erfolgen können.

Vorzugsweise erfolgt die präzise und bezogen auf die Achse des Zentralausrückers radialspielfreie Führung des Magnetkörpers am Gehäuse dadurch, daß der Magnetkörper in seinem Führungsbereich an zwei gegenüberliegenden sich axial erstreckenden Seiten jeweils mit einem Führungsprofil versehen ist, das mit einem komplementär ausgebildeten Gegenprofil des Gehäuses formschlüssig aber axial verschiebbar eingreift.

Zur Vermeidung eines Axialspiels zwischen dem Führungsschuh des Magnetkörpers und dem Ringkörper ist die Anordnung vorteilhaft so getroffen, daß der Führungsschuh den beiden sich gegenüberliegenden Flächen der Umfangsnut mit Vorspannung federnd angedrückt ist, der Führungsschuh also die Nutbreite der Umfangsnut federnd überbrückt.

In zweckmäßiger Ausgestaltung kann der Führungsschuh schließlich der Umfangskrümmung der Umfangsnut über einen Teilabschnitt derselben folgend in seinem mittleren Bereich der einen Fläche der Umfangsnut federnd anliegen und mit seinen beiden Endbereichen der gegenüberliegenden anderen Fläche der Umfangsnut federnd anliegen. Durch eine solche Ausbildung des Führungsschuhs als Federelement, welches den gegenüberliegenden Flächen der Umfangsnut des Ringkörpers nach Art einer Dreipunktabstützung federnd anliegt, wird ein Axialspiel zwischen dem Magnetkörper und dem Ringkörper sowie den daran angeschlossenen Teilen zuverlässig verhindert.

### KURZE BESCHREIBUNG DER ZEICHNUNGEN

Nachfolgend wird die Erfindung anhand eines bevorzugten Ausführungsbeispiels unter Bezugnahme auf die beigefügten, teilweise schematischen und in unterschiedlichen Zeichnungsmaßstäben ausgeführten Zeichnungen näher beschrieben. Darin zeigt:
- Fig. 1: die teilweise abgebrochen dargestellte Vorderansicht des Zentralausrückers mit Blick auf das Ausrücklager,
- Fig. 2,: den teilweise abgebrochen dargestellten Schnitt durch den Zentralausrücker entsprechend der Schnittverlaufslinie II-II in Fig.1, jedoch mit ungeschnitten dargestelltem Sensor,
- Fig. 3: eine teilweise abgebrochen gezeigte Perspektivansicht des Zentralausrückers,
- Fig. 4: den abgebrochen dargestellten Schnitt entlang der Schnittverlaufslinie IV-IV in Fig. 2, jedoch mit ungeschnitten dargestelltem Sensor, und
- Fig. 5: die abgebrochen dargestellte Schnittansicht entlang der Schnittverlaufslinie V-V in Fig. 2.

### DETAILLIERTE BESCHREIBUNG DES AUSFÜHRUNGSBEISPIELS

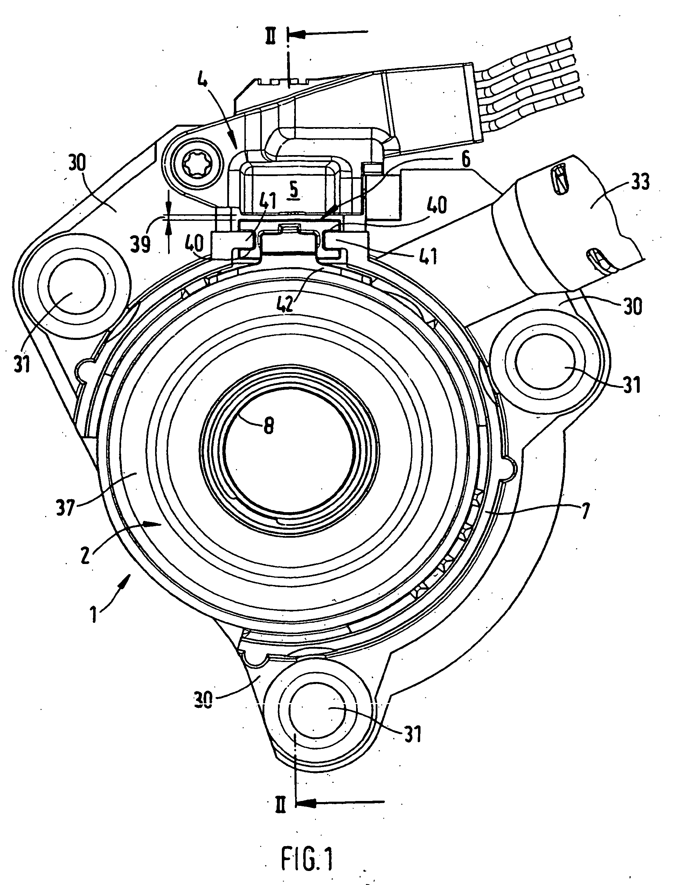

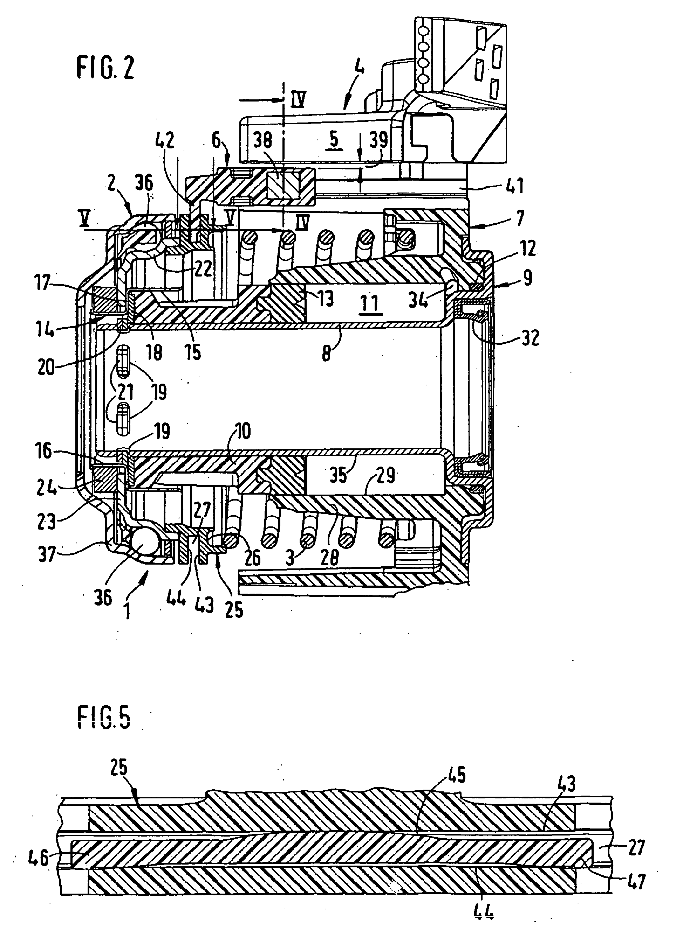

Die Fig. 1 bis 3 zeigen einen Zentralausrücker 1 als Betätigungsorgan einer hydraulischen Kupplungsbetätigung für Trockenreibkupplungen im nicht montierten Zustand in Grundstellung. Am in Fig. 2 linken Ende des Zentralausrückers 1 ist ein an sich bekanntes Ausrücklager 2 als Betätigungskraft-Übertragungsglied angeordnet, über das der Zentralausrücker 1 mit der Trockenreibkupplung (nicht dargestellt) zur Übertragung einer Betätigungsktaft in an sich bekannter Weise wirkverbunden ist. Das Ausrücklager 2 ist mittels einer Vorlastfeder 3, die im Ausführungsbeispiel eine Schraubendruckfeder ist, in Ausrückrichtung, d.h. in Fig. 2 nach links, definiert vorgespannt. Ferner ist eine nachfolgend näher beschriebene Sensoreinrichtung 4 mit einem in den Fig. 1 bis 3 lediglich schematisch dargestellten Sensor 5 und einem Magnetkörper 6 vorgesehen. Die Sensoreinrichtung 4 dient der Erfassung einer für den Aus- bzw. Einrückzustand und den Verschleißzustand der Trockenreibkupplung repräsentativen Größe.

Der Zentralausrücker 1 weist im Ausführungsbeispiel ein aus einem geeigneten thermoplastischen Kunststoff spritzgeformtes Gehäuse 7 auf, welches eine vorzugsweise aus einem Stahlblech gezogene im wesentlichen zylindrische Hülse 8 mit einem im wesentlichen über ihre Länge durchgehend gleichbleibenden Durchmesser konzentrisch umgibt. Die Hülse 8 hat an ihrem in Fig. 2 rechten Ende einen sich teils in radialer Richtung und teils in axialer Richtung nach außen erstreckenden ringförmigen Flansch 9, mittels dessen die Hülse 8 am Gehäuse 7 zentriert und gegenüber diesem unverdrehbar befestigt ist. Auf der Hülse 8 ist ein im Ausführungsbeispiel aus einem geeigneten thermoplastischen Kunststoff spritzgeformter Ringkolben 10 axial gleitbeweglich geführt, der zusammen mit dem Gehäuse 7, der Hülse 8 und deren Flansch 9 einen ringförmigen Druckraum 11 variabel begrenzt. Der Druckraum 11 ist gegenüber der Umgebung mittels einer zwischen dem Gehäuse 7 und dem Flansch 9 vorgesehenen statischen Dichtung in der Form eines O-Rings 12 sowie einer dynamischen Dichtung in der Form einer Dichtmanschette 13 aus einem elastomeren Material abgedichtet, die an dem in Fig. 2 rechten Ende des Ringkolbens 10 angebracht ist.

An dem in Fig. 2 linken Ende des Ringkolbens 10 ist ein Blechring 14 befestigt, der einen zylindrischen Abschnitt 15 größeren Durchmessers und einen zylindrischen Abschnitt 16 kleineren Durchmessers aufweist, wobei die beiden Abschnitte 15, 16 konzentrisch mit der Hülse 8 angeordnet und miteinander durch einen Steg 17 verbunden sind. Die Befestigung des Blechrings 14 am Ringkolben 10 erfolgt auf geeignete Weise innerhalb des Abschnitts 15 größeren Durchmessers. Zwischen dem Steg 17 und dem in Fig. 2 linken Ende des Ringkolbens 10 befindet sich eine am Ringkolben 10 auf geeignete Weise befestigte ringförmige Anschlagscheibe 18. Der Anschlagscheibe 18 ist in der Nähe des bezüglich Fig. 2 linken Endes der Hülse 8 ein in schlitzförmigen Ausnehmungen 19 der Hülse 8 nach Art eines Sprengrings befestigter Anschlagring 20 zugeordnet, der mit radial nach innen gerichteten Vorsprüngen 21 in die Ausnehmungen 19 eingreift. Der in radialer Richtung über die Hülse 8 nach außen vorstehende Anschlagring 20 bildet einen wegbegrenzenden Anschlag für die Anschlagscheibe 18 am Ringkolben 10, wodurch verhindert wird, daß der Ringkolben 10 mit den damit verbundenen Bauteilen im nichtmontierten Zustand des Zentralausrückers 1 von der Hülse 8 axial abgezogen werden kann.

An dem in Fig. 2 linken Ende des Ringkolbens 10 ist der unverdrehbare Innenring 22 des Ausrücklagers 2 derart befestigt, daß der Innenring 22 mit einem ringförmigen Flansch 23 zwischen dem Steg 17 des Blechrings 14 und einem auf dem zylindrischen Abschnitt 16 des Blechrings 14 sitzenden Haltering 24 eingespannt ist. Das Ausrücklager 2 ist wie üblich ein Wälzlager mit Kugeln 36 als Wälzelemente, die den Außenring 37 des Ausrücklagers drehbar lagern. Der Innenring 22 trägt an seinem in Fig. 2 rechten Ende einen auf geeignete Weise fest mit ihm verbundenen Ringkörper 25, der mit einer der Vorlastfeder 3 zugekehrten Umfangsrille 26 versehen ist, in welcher das in Fig. 2 linke Ende der Vorlastfeder 3 abgestützt ist. Außerdem besitzt der aus einem geeigneten Kunststoff spritzgeformte Ringkörper 25 eine sich radial nach außen öffnende Umfangsnut 27, deren Ausbildung und Funktion nachfolgend noch näher erläutert ist.

Das Gehäuse 7 des in den Fig. 1 bis 3 dargestellten Zentralausrückers 1 besitzt einen im wesentlichen hohlzylindrischen Wandungsabschnitt 28, der eine zentrale Durchgangsbohrung 29 mit konstantem Durchmesser aufweist und an seinem in Fig. 2 rechten Ende in drei Flanschabschnitte 30 übergeht, die die Fig. 1 in der Vorderansicht zeigt. Jeder der Flanschabschnitte 30 ist mit einem Befestigungsauge 31, die im Kraftfahrzeug der Befestigung des Zentralausrückers 1 an einer Getriebewand bzw. einem Getriebedeckel (nicht dargestellt) mittels beispielsweise Schrauben (nicht dargestellt) dienen, welche die Befestigungsaugen 31 durchgreifen. Im montierten Zustand des Zentralausrückers 1 erstreckt sich die Kupplungs- bzw. Getriebewelle (nicht dargestellt) durch die Hülse 8 hindurch, wobei ein am Flansch 9 gehaltener Wellendichtring 32 dem Außenumfang der Kupplungs- bzw. Getriebewelle dichtend anliegt.

Das Gehäuse 7 ist mit einem Hydraulikanschluß 33 versehen, an den eine zu einem Geberzylinder (nicht dargestellt) führende Druckleitung (nicht dargestellt) angeschlossen werden kann. Der Hydraulikanschluß ist mit dem Druckraum 11 über einen Kanal 34 verbunden, um die Zufuhr von Hydraulikflüssigkeit zu dem Druckraum 11 zu gestatten, mittels der der Ringkolben 10 verschoben werden kann. Hierbei bildet die Außenumfangsfläche 35 der Hülse 8, die sich koaxial zur Durchgangsbohrung 29 des Gehäuses 7 über die gesamte Länge der Durchgangsbohrung 29 und darüber hinaus erstreckt, eine Lauf- und Führungsfläche für den Ringkolben 10, der mit seiner Innenbohrung an der zylindrischen Außenumfangsfläche 35 der Hülse 8 geführt ist.

Der hydraulische Betrieb des Zentralausrückers 1 ist bekannt und bedarf daher hier keiner näheren Erläuterung. Es ist jedenfalls ohne weiteres aus Fig. 2 ersichtlich, daß bei einer Bewegung des ggf. druckbeaufschlagten Ringkolbens 10 und damit des Ausrücklagers 2 mit dem Ringkörper 25 in Fig. 2 nach rechts die zwischen dem Ausrücklager 2 und dem Gehäuse 7 eingespannte Vorlastfeder 3 zusammengedrückt bzw. bei einer Bewegung des Ringkolbens 10 in Fig. 2 nach links entspannt wird.

Der stationär am Gehäuse 7 befestigte Sensor 5 der Sensoreinrichtung 4 befindet sich in der Darstellung gemäß Fig. 2 oberhalb des einen Magneten 38 umschließenden Magnetkörpers 6. Der Magnetkörper 6 ist mit über seinen axialen Verschiebeweg gleichbleibendem Abstand 39 zum Sensor 5 am Gehäuse 7 verschiebbar geführt. Zu diesem Zweck ist der Magnetkörper 6 in seinem Führungsbereich an zwei gegenüberliegenden sich axial erstreckenden Seiten mit jeweils einem im Ausführungsbeispiel nutförmigen Führungsprofil 40 versehen. Die beiden gegenüberliegenden Führungsprofile 40 greifen mit komplementär ausgebildeten und im Ausführungsbeispiel rippenförmigen Gegenprofilen 41 am Gehäuse 7 formschlüssig aber axial verschiebbar ein, wie aus den Fig. 1, 3 und 4 ersichtlich ist.

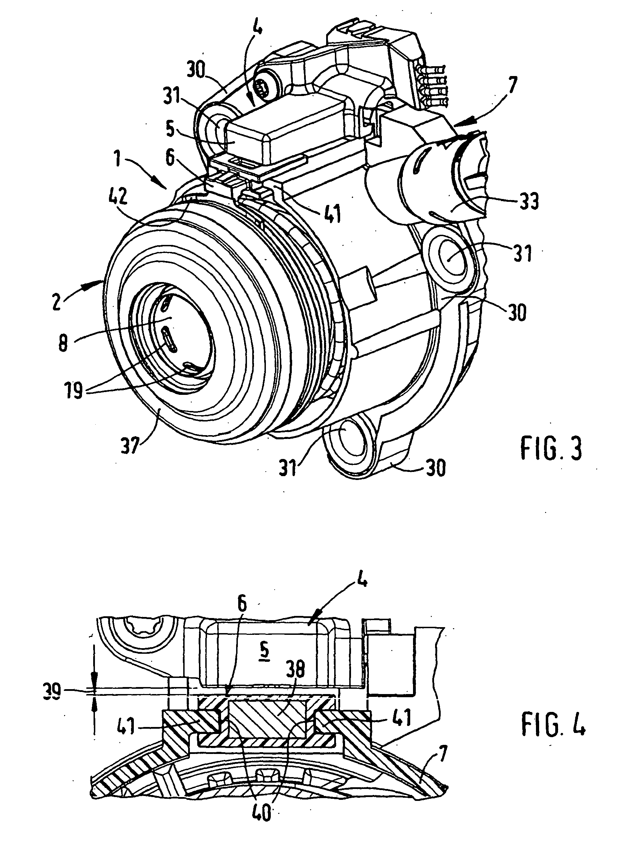

Wie am besten aus Fig. 2 hervorgeht ist am mit Bezug auf diese Fig. linken Ende des Magnetkörpers 6 und damit einteilig geformt ein Führungsschuh 42 vorgesehen, der in die Umfangsnut 27 des Ringkörpers 25 axial spielfrei aber radial relativbeweglich eingreift. Die axiale Spielfreiheit wird im Ausführungsbeispiel dadurch erreicht, daß der Führungsschuh 42 den beiden gegenüberliegenden Flächen 43 und 44 der Umfangsnut 27 mit Vorspannung federnd angedrückt ist. Wie aus den Fig. 1 und 3 ersichtlich ist, ist der Führungsschuh 42 kreisbogenförmig gekrümmt und folgt somit dem Kreisverlauf der Umfangsnut 27 über einen Teilabschnitt derselben.

Aus Fig. 5 ist ersichtlich, auf welche Weise im Ausführungsbeispiel der Führungsschuh 42 beiden Flächen 43 und 44 der Umfangsnut 27 federnd anliegt. Hierfür ist im mittleren Bereich des Führungsschuhs 42 eine konvexe Wölbung 45 vorgesehen, die der Fläche 43 der Umfangsnut 27 anliegt, während die beiden Endbereiche 46 und 47 des Führungsschuhs. 42 der anderen Fläche 44 der Umfangsnut 27 anliegen. Die federnde Andrückung des Führungsschuhs 42 an die beiden gegenüberliegenden Flächen 43 und 44 der Umfangs nut 27 entsteht dadurch, daß der mit Bezug auf Fig. 5 senkrechte Abstand zwischen der Mitte der Wölbung 45 und den Endbereichen 46 und 47 des Führungsschuhs 42 etwas größer ist als die Breite der Umfangsnut 27. Der Führungsschuh ist also wie eine Blattfeder zwischen den beiden Flächen 43 und 44 eingespannt und verhindert Axialverschiebungen zwischen dem Führungsschuh und dem Ringkörper 25, erlaubt aber radiale Relativverlagerungen zwischen dem Führungsschuh und dem Ringkörper 25.

Es wird ein Zentralausrücker für eine hydraulische Kupplungsbetätigung offenbart, umfassend ein eine Durchgangsbohrung aufweisendes, Gehäuse und eine darin angeordnete, daran befestigte Hülse, auf der ein zur Kupplung wirkverbindbarer Ringkolben verschiebbar geführt ist, an dem ein Ausrücklager-Innenring befestigt ist. Hierbei ist zur Erfassung der Axialposition des Ringkolbens ein Sensor am Gehäuse befestigt, dem ein verschiebbar geführter Magnetkörper zugeordnet ist, welcher mit einem am Ausrücklager-Innenring befestigten Ringkörper zur Mitnahme durch den Ringkolben axial spielfrei verbunden ist. Erfindungsgemäß ist der Magnetkörper mit über seinen Verschiebeweg gleichbleibendem Abstand zum Sensor am Gehäuse verschiebbar geführt und greift mit einem Führungsschuh in eine Umfangsnut des Ringkörpers axial spielfrei aber radial beweglich ein. Im Ergebnis bleibt besagter Abstand bei allen axialen Relativverschiebungen und auftretenden Ausrücklager-Taumelbewegungen konstant und an den Führungsflächen für den Magnetkörper tritt durch Schleppmoment-Einwirkung im Betrieb kein die Sensorsignal-Genauigkeit beeinträchtigender Verschleiß ein.

### BEZUGSZAHLENLISTE

- 1: Zentralausrücker
- 2: Ausrücklager
- 3: Vorlastfeder
- 4: Sensoreinrichtung
- 5: Sensor
- 6: Magnetkörper
- 7: Gehäuse
- 8: Hülse
- 9: Flansch
- 10: Ringkolben
- 11: Druckraum
- 12: O-Ring
- 13: Dichtmanschette
- 14: Blechring
- 15: zylindrischer Abschnitt
- 16: zylindrischer Abschnitt
- 17: Steg
- 18: Anschlagscheibe
- 19: Ausnehmungen
- 20: Anschlagring
- 21: Vorsprünge
- 22: Innenring
- 23: ringförmiger Flansch
- 24: Haltering
- 25: Ringkörper
- 26: Umfangsrille
- 27: Umfangsnut
- 28: Wandungsabschnitt
- 29: Durchgangsbohrung
- 30: Flanschabschnitte
- 31: Befestigungsauge
- 32: Wellendichtring
- 33: Hydraulikanschluß
- 34: Kanal
- 35: Außenumfangsfläche
- 36: Kugeln
- 37: Außenring
- 38: Magnet
- 39: Abstand
- 40: Führungsprofil
- 41: Gegenprofil
- 42: Führungsschuh.
- 43: Fläche
- 44: Fläche
- 45: Wölbung
- 46: Endbereich
- 47: Endbereich

## Patentansprüche

1. Zentralausrücker (1) für eine hydraulische Kupplungsbetätigung, mit einem eine zylindrische Durchgangsbohrung (29) aufweisenden Gehäuse (7) und einer konzentrisch innerhalb der Durchgangsbohrung (29) angeordneten und an ihrem einen Ende zentriert am Gehäuse (7) befestigten rohrförmigen Hülse (8), auf der ein mit der Kupplung wirkverbindbarer Ringkolben (10) axial verschiebbar geführt ist, an dessen äußerem Ende der Innenring (22) eines Ausrücklagers (2) befestigt ist, wobei ein Sensor (5) zur Erfassung der axialen Position des Ringkolbens (10) relativ zum Gehäuse (7) stationär am Gehäuse (7) befestigt ist, und wobei dem Sensor (5) ein axial verschiebbar geführter Magnetkörper (6) zugeordnet ist, der mit einem am Innenring (22) befestigten Ringkörper (25) zur Mitnahme durch den Ringkolben (10) bei dessen axialen Verschiebungen axial spielfrei verbunden ist, **dadurch gekennzeichnet, daß** der Magnetkörper (6) mit über seinen Verschiebeweg gleichbleibendem Abstand (39) zum Sensor (5) am Gehäuse (7) verschiebbar geführt ist und mit einem Führungsschuh (42) in eine Umfangsnut (27) des Ringkörpers (25) axial spielfrei aber radial beweglich eingreift.

2. Zentralausrücker nach Anspruch 1, **dadurch gekennzeichnet, daß** der Magnetkörper (6) in seinem Führungsbereich an zwei gegenüberliegenden sich axial erstreckenden Seiten jeweils mit einem Führungsprofil (40) versehen ist, das mit einem komplementär ausgebildeten Gegenprofil (41) des Gehäuses (7) formschlüssig aber axial verschiebbar eingreift.

3. Zentralausrücker nach Anspruch 1, **dadurch gekennzeichnet, daß** der Führungsschuh (42) den beiden sich gegenüberliegenden Flächen (43, 44) der Umfangsnut (27) mit Vorspannung federnd angedrückt ist.

4. Zentralausrücker nach Anspruch 3, **dadurch gekennzeichnet, daß** der Führungsschuh (42) der Umfangskrümmung der Umfangsnut (27) über einen Teilabschnitt derselben folgend in seinem mittleren Bereich der einen Fläche (43) der Umfangsnut (27) federnd anliegt und mit seinen beiden Endbereichen (46, 47) der gegenüberliegenden anderen Fläche (44) der Umfangsnut (27) federnd anliegt.

## Claims

1. Central release device (1) for a hydraulic clutch actuation, comprising a housing (7) which has a cylindrical passage bore (29), and a tubular sleeve (8) which is arranged concentrically within the passage bore (29) and fastened at one end thereof to the housing (7) with centering and on which an annular piston (10) operatively connectible with the clutch is guided to be axially displaceable, the inner ring (22) of a release bearing (2) being fastened to the outer end of the piston, wherein a sensor (5) for detecting the axial position of the annular piston (10) relative to the housing (7) is fastened to the housing (7) in stationary position and wherein associated with the sensor (5) is a magnet body (6) which is guided to be axially displaceable and which is connected axially free of play with an annular body (25) which is fastened to the inner ring (22), for entrainment by the annular piston (10) on axial displacements thereof, **characterized in that** the magnet body (6) is guided at the housing (7) to be displaceable with a spacing (39) from the sensor (5), which remains constant over the displacement path of the magnet body, and engages with a guide shoe (42) in a circumferential groove (27) of the annular body (25) to be free of axial play, but radially movable.

2. Central release device according to claim 1, **characterized in that** the magnet body (6) is provided in its guide region at each of two opposite axially extending sides with a respective guide profile (40) engaging mechanically positively, but axially displaceably, with a counter-profile (41), which is of complementary form, of the housing (7).

3. Central release device according to claim 1, **characterized in that** the guide shoe (42) is resiliently urged by a bias against the two opposite surfaces (43, 44) of the circumferential groove (27).

4. Central release device according to claim 3, **characterized in that** the guide shoe (42) resiliently bears, following the circumferential curvature of the circumferential groove (27) over a sub-section thereof, in its middle region against one surface (43) of the circumferential groove (27) and resiliently bears with its two end regions (46, 47) against the oppositely disposed other surface (44) of the circumferential groove (27).

## Revendications

1. Dispositif de débrayage central (1) pour un actionneur hydraulique d'embrayage, comprenant un carter (7) présentant un alésage de passage (29) cylindrique, et une douille (8) de forme tubulaire, qui est agencée concentriquement à l'intérieur de l'alésage de passage (29) et est fixée, à l'une de ses extrémités, de manière centrée, au carter (7), et sur laquelle est guidé de manière axialement coulissante, un piston annulaire (10) à l'extrémité extérieure duquel est fixée la bague intérieure (22) d'une butée de débrayage (2), un capteur (5) destiné à l'acquisition de la position axiale du piston annulaire (10) par rapport au carter (7) étant fixé de manière stationnaire au carter (7), et un corps magnétique (6) guidé de manière axialement coulissante étant associé au capteur (5) et étant relié axialement sans jeu à un corps annulaire (25) fixé à la bague intérieure (22), pour être entrainé par le piston annulaire (10) lors du coulissement axial de celui-ci, **caractérisé en ce que** le corps magnétique (6) est guidé sur le carter (7) de manière à pouvoir coulisser à une distance (39), constante le long de sa course de coulissement, par rapport au capteur (5), et s'engage avec un patin de guidage (42), axialement sans jeu mais radialement mobile, dans une rainure périphérique (27) du corps annulaire (25).

2. Dispositif de débrayage central selon la revendication 1, **caractérisé en ce que** dans sa zone de guidage, le corps magnétique (6) est pourvu, sur chacun de deux côtés opposés s'étendant axialement, d'un profil de guidage (40) qui coopère par complémentarité de formes mais de façon axialement coulissante, avec un profil conjugué (41) du carter (7), de configuration complémentaire.

3. Dispositif de débrayage central selon la revendication 1, **caractérisé en ce que** le patin de guidage (42) est appuyé élastiquement sous précontrainte contre les deux faces opposées (43, 44) de la rainure périphérique (27).

4. Dispositif de débrayage central selon la revendication 3, **caractérisé en ce que** le patin de guidage (42), en suivant la courbure périphérique de la rainure périphérique (27) sur un secteur partiel de celle-ci, s'applique élastiquement, dans sa zone centrale, contre une face (43) de la rainure périphérique (27), et s'applique élastiquement, avec ses deux zones d'extrémité (46, 47), contre l'autre face (44) opposée de la rainure périphérique (27).
